# EUROPEAN PATENT SPECIFICATION

(11) **EP 4 062 728 B1**
(45) Date of publication and mention of the grant of the patent: **12.03.2025**
(21) Application number: 22164183.0
(22) Date of filing: 24.03.2022
(51) Int. Cl.: A01B 61/04

(54) **SYSTEM AND METHOD FOR DETERMINING THE REMAINING FATIGUE LIFE OF A SHEAR PIN OF A GROUND-ENGAGING SYSTEM OF AN AGRICULTURAL IMPLEMENT**
SYSTEM UND VERFAHREN ZUR BESTIMMUNG DER ERMÜDUNGSLEBENSDAUER EINES SCHERSTIFTES EINES BODENEINGRIFFSSYSTEMS EINES LANDWIRTSCHAFTLICHEN GERÄTS
SYSTÈME ET PROCÉDÉ POUR DÉTERMINER LA DURÉE DE VIE RESTANTE EN FATIGUE D'UNE GOUPILLE DE CISAILLEMENT D'UN SYSTÈME DE MISE EN PRISE AVEC LE SOL D'UN OUTIL AGRICOLE

(30) Priority: 26.03.2021 US 202117213400
(43) Date of publication of application: 28.09.2022
(73) Proprietor: CNH Industrial Belgium NV, 8210 Zedelgem (BE)
(72) Inventor: GLOVIER, Scott, Lombard (US); HEITZIG, Joseph, Washington (US)
(74) Representative: CNH Industrial IP Department

(56) References cited:
- EP-A1- 3 729 931
- EP-A1- 3 815 485
- CA-A1- 3 146 419
- US-A1- 2017 196 160
- US-A1- 2021 102 856
- US-A1- 2021 102 984

## Description

### FIELD OF THE INVENTION

The present disclosure relates generally to agricultural implements and, more particularly, to systems and methods for determining the remaining fatigue life of a shear pin of a ground-engaging system of an agricultural implement.

### BACKGROUND OF THE INVENTION

It is well known that, to attain the best agricultural performance from a field, a farmer must cultivate the soil, typically by performing a tillage operation. Modern farmers perform tillage operations by pulling a tillage implement behind an agricultural work vehicle, such as a tractor. Tillage implements typically include a plurality of ground-engaging tools configured to penetrate the soil to a particular depth. In this respect, the ground-engaging tools may be pivotably coupled to a frame of the tillage implement. In many instances, biasing elements, such as springs, are used to exert biasing forces on the ground-engaging tools. This configuration may allow the ground-engaging tools to be biased towards a desired position relative to the frame, thereby maintaining the particular depth of soil penetration as the agricultural work vehicle pulls the tillage implement through the field. Additionally, this configuration may also permit the ground-engaging tools to pivot out of the way of rocks or other impediments in the soil, thereby preventing damage to the ground-engaging tools or other components on the implement.

In addition to such biasing elements, tillage implements often utilize a shear-bolt mounting arrangement in which shear pins or bolts are used to couple the ground-engaging tools to the frame or associated attachment structure. In such an embodiment, the shear pins serve to protect the ground-engaging tools from excessive loading that would otherwise substantially damage or break the tools. For instance, the shear pins may break when the adjustability provided by the associated biasing element is insufficient, which allows a ground-engaging tool to pivot out of the way of rocks or other impediments in the soil and prevent the ground-engaging tool from damage.

When a shear pin breaks during the performance of an agricultural operation, the associated ground-engaging tool typically will no longer be capable of effectively working the soil. However, with current implement configurations, it is often very difficult for the operator to determine when one or more of the shear pins have failed. As such, an extensive portion of the field may have been worked before discovering the broken shear pin(s), which negatively affects subsequent field operations and, ultimately, yields.

Patent application publication CA3146419 A1 discloses a system for monitoring the operational status of ground-engaging tools of an agricultural implement. The system includes a frame and an assembly including an attachment structure configured to be coupled to the frame and a ground-engaging tool pivotably coupled to the attachment structure at a pivot point. The system further includes a shear pin at least partially extending through both the attachment structure and ground-engaging tool to prevent pivoting of the ground-engaging tool about the pivot point. Additionally, the system includes a sensor configured to detect a load applied through a pivot member extending through at least one of the frame or assembly at any pivot point between the frame and the ground engaging tool and a controller, communicatively coupled to the sensor, configured to determine a change in the working condition of the shear pin based on the detected load applied through the pivot member.

Accordingly, a system and method for determining the remaining fatigue life of a shear pin of a ground-engaging system of an agricultural implement would be welcomed in the technology.

### BRIEF DESCRIPTION OF THE INVENTION

Aspects and advantages of the invention will be set forth in part in the following description, or may be obvious from the description, or may be learned through practice of the invention.

The solution to the technical problem is achieved by the subject-matter of independent claims 1 and 11, defining per se the invention. Particular embodiments of the invention are defined in the dependent claims.

In one aspect, the present subject matter is directed to a system for determining the remaining fatigue life of a shear pin of a ground engaging system of an agricultural implement. The system includes a ground-engaging system which has an attachment structure coupled to a frame of an agricultural implement, a ground-engaging tool pivotably coupled to the attachment structure at a pivot j oint, a shear pin at least partially extending through the attachment structure and the ground-engaging tool to prevent pivoting of the ground-engaging tool about the pivot joint, and a biasing element coupled between the attachment structure and the ground-engaging tool, the biasing element configured to bias the ground-engaging tool towards a ground-engaging position. The system further includes at least one sensor configured to generate data indicative of a load on at least one component of the ground-engaging system. Additionally, the system includes a controller communicatively coupled to the at least one sensor, the controller being configured to determine a remaining fatigue life of the shear pin based at least in part on the data indicative of the load on the at least one component of the ground-engaging system. The at least one component may comprise the ground-engaging tool and the data may be indicative of a load on the ground-engaging tool. The at least one sensor may comprise one or more of an accelerometer or a strain gauge coupled to the ground-engaging tool. The system may further comprise a support pin at least partially extending through the attachment structure and the ground-engaging tool at the pivot joint to allow the ground-engaging tool to pivot relative to the attachment structure. The at least one component may comprise the support pin and the data may be indicative of a load on the support pin. The at least one sensor may comprise a strain gauge coupled to the support pin. A fatigue life threshold of the shear pin may be less than a fatigue life threshold of the support pin. The at least one component may comprise the biasing element and the data may be indicative of a load on the biasing element. The at least one sensor may comprise one or more of a string potentiometer and a differential transformer coupled to the biasing element. The at least one component may comprise the shear pin and the data may be indicative of a load on the shear pin. The at least one sensor may comprise a strain gauge coupled to the shear pin. The controller may be further configured to control an operation of the agricultural implement when the remaining fatigue life is less than or equal to a fatigue life threshold. Controlling the operation of the agricultural implement may comprise at least one of controlling a user interface of the agricultural implement to notify an operator of the agricultural implement of the remaining fatigue life or stopping the agricultural implement.

**In** another non-claimed aspect, the present subject matter is directed to a shank assembly of an agricultural implement. The shank assembly includes an attachment structure coupled to a frame of an agricultural implement, a shank pivotably coupled to the attachment structure at a pivot j oint, a support pin at least partially extending through the attachment structure and the shank at the pivot joint to allow the shank to pivot relative to the attachment structure, a shear pin at least partially extending through the attachment structure and the shank at a location spaced from the pivot joint to prevent pivoting of the shank about the pivot joint, and a biasing element coupled between the attachment structure and the shank, the biasing element configured to bias the shank towards a ground-engaging position. The shank assembly further includes at least one sensor configured to generate data indicative of at least one of a load on the shank, a load on the support pin, or a load on the biasing element. Additionally, the shank assembly includes a controller communicatively coupled to the at least one sensor, the controller being configured to determine a remaining fatigue life of the shear pin based at least in part on the data indicative of the at least one of the load on the shank, the load on the support pin, or the load on biasing element. The controller may be further configured to control an operation of the agricultural implement when the remaining fatigue life is less than or equal to a fatigue life threshold.

In an additional aspect, the present subject matter is directed to a method for determining a remaining fatigue life of a shear pin of a ground engaging system of an agricultural implement. The ground engaging system has an attachment structure configured to be coupled to a frame of the agricultural implement, a ground-engaging tool pivotably coupled to the attachment structure at a pivot joint, a shear pin at least partially extending through the attachment structure and the ground-engaging tool, and a biasing element configured to bias the ground-engaging tool towards a ground-engaging position. The method includes receiving, with one or more computing devices, data from at least one sensor, the data being indicative of a load on at least one component of the ground-engaging system. The method further includes determining, with the one or more computing devices, a remaining fatigue life of the shear pin based at least in part on the data indicative of the load on the at least one component of the ground-engaging system. Additionally, the method includes controlling, with the one or more computing devices, an operation of the agricultural implement based at least in part on the remaining fatigue life of the shear pin. The data may be indicative of at least one of: a load on the ground-engaging tool, a load on a support pin, the support pin at least partially extending through the attachment structure and the ground-engaging tool at the pivot joint to allow the ground-engaging tool to pivot relative to the attachment structure, a load on the biasing element, or a load on the shear pin. Controlling the operation of the agricultural implement may comprise controlling the operation of the agricultural implement when the remaining fatigue life is equal to or less than a fatigue life threshold. Controlling the operation of the agricultural implement may comprise at least one of controlling a user interface of the agricultural implement to notify an operator of the agricultural implement of the remaining fatigue life or stopping the agricultural implement. The ground-engaging tool may comprise a shank.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of an agricultural implement coupled to a work vehicle in accordance with aspects of the present subject matter;
FIG. 2 illustrates another perspective view of the agricultural implement shown in FIG. 1 in accordance with aspects of the present subject matter, particularly illustrating various components of the implement;
FIG. 3 illustrates a side view of one embodiment of a shank assembly including a shank pivotably coupled to an implement frame in accordance with aspects of the present subject matter, particularly illustrating a shear pin extending through the shank and other associated components of one embodiment of a system for determining the remaining fatigue life of the shear pin in accordance with aspects of the present subject matter;
FIG. 4 illustrates a schematic view of a system for determining the remaining fatigue life of a shear pin of a ground-engaging system of an agricultural implement in accordance with aspects of the present subject matter; and
FIG. 5 illustrates a flow diagram of one embodiment of a method for determining a remaining fatigue life of a shear pin of a ground-engaging system of an agricultural implement in accordance with aspects of the present subject matter.

Repeat use of reference characters in the present specification and drawings is intended to represent the same or analogous features or elements of the present technology.

### DETAILED DESCRIPTION OF THE INVENTION

Reference now will be made in detail to embodiments of the invention, one or more examples of which are illustrated in the drawings. Each example is provided by way of explanation of the invention, not limitation of the invention.

In general, the present subject matter is directed to systems and methods for determining the remaining fatigue life of a shear pin of a ground-engaging system of an agricultural implement. Specifically, in several embodiments, the disclosed system may be used to determine the remaining fatigue life of a shear bolt or pin of a ground-engaging system, where the shear pin prevents a ground-engaging tool, such as a shank, from pivoting during normal operation of the ground engaging system about a pivot joint coupling the ground-engaging tool to a frame of an agricultural implement. For instance, the disclosed system may include one or more sensors configured to monitor the load on a component of the ground-engaging system to determine the remaining fatigue life of the shear pin. For example, the disclosed system may include indirect sensors, such as a sensor configured to generate data indicative of a load on a spring configured to bias the ground-engaging tool towards engagement with a field, a sensor configured to generate data indicative of a load on the support bolt of the pivot joint about which the shank is pivotable, and/or a sensor configured to generate data indicative of a load on the shank itself. Alternatively, or additionally, the disclosed system may include direct sensors, such as a sensor configured to generate data indicative of a direct load on the shear pin. A controller of the system may be configured to receive the data from the indirect sensor(s) and/or the direct sensor(s) and, in turn, determine the remaining fatigue life on the shear pin. Based on the remaining fatigue life, the controller may further indicate the remaining fatigue life to an operator and/or slow down/stop the implement. As such, the disclosed system and method allow the fatigue status of a shear pin to be actively monitored, thereby allowing an operator to replace the shear pin before it fails and/or take other steps/actions in view of the remaining fatigue life of the shear pin.

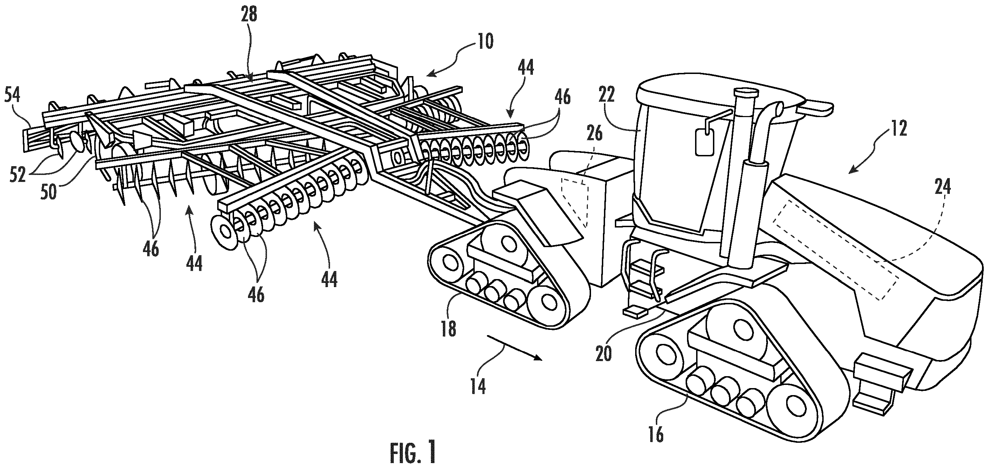

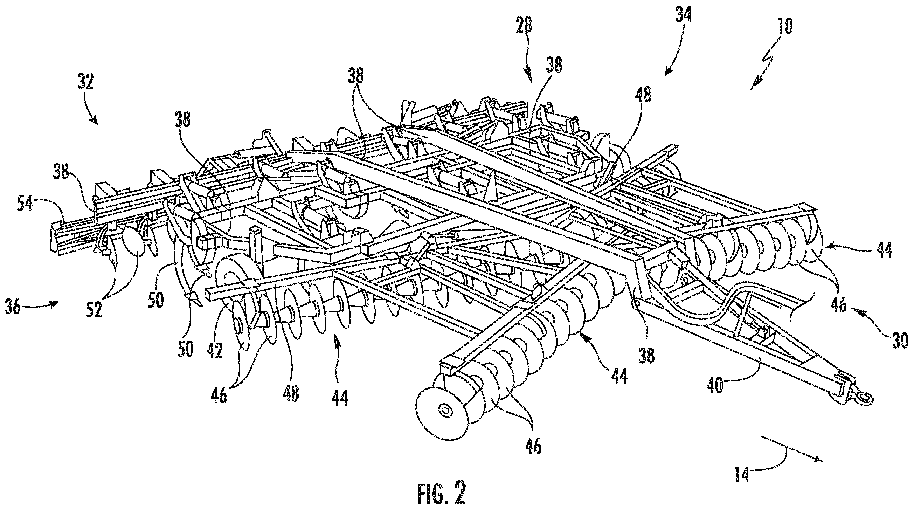

Referring now to the drawings, FIGS. 1 and 2 illustrate differing perspective views of one embodiment of an agricultural implement 10 in accordance with aspects of the present subject matter. Specifically, FIG. 1 illustrates a perspective view of the agricultural implement 10 coupled to a work vehicle 12. Additionally, FIG. 2 illustrates a perspective view of the implement 10, particularly illustrating various components of the implement 10.

In general, the implement 10 may be configured to be towed across a field in a direction of travel (e.g., as indicated by arrow 14 in FIG. 1) by the work vehicle 12. As shown, the implement 10 may be configured as a tillage implement, and the work vehicle 12 may be configured as an agricultural tractor. However, in other embodiments, the implement 10 may be configured as any other suitable type of implement, such as a seed-planting implement, a fertilizer-dispensing implement, and/or the like. Similarly, the work vehicle 12 may be configured as any other suitable type of vehicle, such as an agricultural harvester, a self-propelled sprayer, and/or the like.

As shown in FIG. 1, the work vehicle 12 may include a pair of front track assemblies 16, a pair or rear track assemblies 18, and a frame or chassis 20 coupled to and supported by the track assemblies 16, 18. An operator's cab 22 may be supported by a portion of the chassis 20 and may house various input devices for permitting an operator to control the operation of one or more components of the work vehicle 12 and/or one or more components of the implement 10. Additionally, as is generally understood, the work vehicle 12 may include an engine 24 and a transmission 26 mounted on the chassis 20. The transmission 26 may be operably coupled to the engine 24 and may provide variably adjusted gear ratios for transferring engine power to the track assemblies 16, 18 via a drive axle assembly (not shown) (or via axles if multiple drive axles are employed).

As shown particularly in FIG. 2, the implement 10 may include a frame 28. More specifically, the frame 28 may extend longitudinally between a forward end 30 and an aft end 32. The frame 28 may also extend laterally between a first side 34 and a second side 36. In this respect, the frame 28 generally includes a plurality of structural frame members 38, such as beams, bars, and/or the like, configured to support or couple to a plurality of components. Furthermore, a hitch assembly 40 may be connected to the frame 28 and configured to couple the implement 10 to the work vehicle 12. Additionally, a plurality of wheels 42 (one of which is shown in FIG. 2) may be coupled to the frame 28 to facilitate towing the implement 10 in the direction of travel 14.

In several embodiments, one or more ground-engaging tools may be coupled to and/or supported by the frame 28. More particularly, in certain embodiments, the ground-engaging tools may include one or more shanks 50 and/or one or more disc blades 46 supported relative to the frame 28. In one embodiment, each shank 50 and/or disc blade 46 may be individually supported relative to the frame 28. Alternatively, one or more groups or sections of the ground-engaging tools may be ganged together to form one or more ganged tool assemblies, such as the disc gang assemblies 44 shown in FIGS 1 and 2.

As illustrated in FIG. 2, each disc gang assembly 44 includes a toolbar 48 coupled to the implement frame 28 and a plurality of disc blades 46 supported by the toolbar 48 relative to the implement frame 28. Each disc blade 46 may, in turn, be configured to penetrate into or otherwise engage the soil as the implement 10 is being pulled through the field. As is generally understood, the various disc gang assemblies 44 may be oriented at an angle relative to the direction of travel 14 to promote more effective tilling of the soil.

It should be appreciated that, in addition to the shanks 50 and the disc blades 46, the implement frame 28 may be configured to support any other suitable ground-engaging tools. For instance, in the illustrated embodiment, the frame 28 is also configured to support a plurality of leveling blades 52 and rolling (or crumbler) basket assemblies 54. In other embodiments, any other suitable ground-engaging tools may be coupled to and supported by the implement frame 28.

It should be appreciated that the configuration of the implement 10 described above and shown in FIGS. 1 and 2 is provided only to place the present subject matter in an exemplary field of use. Thus, it should be appreciated that the present subject matter may be readily adaptable to any manner of implement configuration.

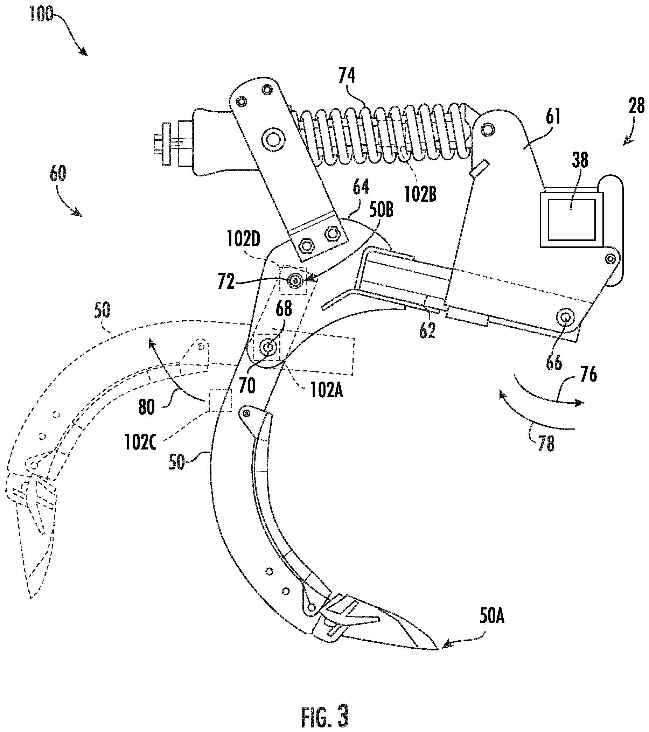

Referring now to FIG. 3, a side-view of a shank assembly 100 including one of the shanks 50 of the tillage implement 10 described above with reference to FIGS. 1 and 2 is illustrated in accordance with aspects of the present subject matter. As shown in the illustrated embodiment, the shank assembly 100 includes the shank 50 and an associated attachment structure 60 for pivotably coupling the shank 50 to the implement frame 28 (e.g., about a first pivot point 66). More particularly, the attachment structure 60 includes a first attachment member 61, a second attachment member 62, and a third attachment member 64. The first attachment member 61 is fixed to the implement frame 28 (e.g., to frame member 38). A first end of the second attachment member 62 is pivotably coupled to the first attachment member 61 at the first pivot joint 66. The third attachment member 64 is fixed to a second end of the second attachment member 62.

The shank 50 extends between a proximal or tip end 50A and a distal end 50B, with the shank 50 being pivotably coupled to the attachment structure 60 (e.g., to the third attachment member 64) of the shank assembly 100 at a second pivot point 68 proximate the distal end 50B. For instance, the shank 50 may be coupled to the third attachment member 64 via an associated pivot member 70 (e.g., a support pivot bolt or pin, hereinafter referred to as "the support pin 70") extending through both the shank 50 and the attachment member 64 at the second pivot point 68. As such, the shank 50 may pivot about the second pivot point 68 relative to the frame 28 independent of the pivoting about the first pivot point 66.

Further, as shown in FIG. 3, the shank assembly 100 may include a shear bolt or pin 72 (hereinafter referred to as "the shear pin 72") for preventing pivoting of the shank 50 about the second pivot point 68 during normal operation of the tillage implement. For instance, the shear pin 72 at least partially extends through both the attachment structure 60 (e.g., through third attachment member 64) and the shank 50 at a location spaced apart from the second pivot point 68. For example, in the illustrated embodiment, the shear pin 72 is received within openings formed above the second pivot point 68 in the attachment member 64 and the shank 50. However, the shear pin 72 may be positioned at any other suitable location relative to the second pivot point 68. In one embodiment, the shear pin 72 may correspond to a mechanical pin designed such that the pin breaks when a predetermined force is applied through the pin or a certain amount of fatigue of the pin has occurred. For instance, the shear pin 72 may be designed to withstand normal or expected loading conditions for the shank 50 and fail when the loads applied through the shear pin 72 exceed or substantially exceed such normal/expected loading conditions or when the fatigue life of the shear pin 72 is reached. Particularly, the shear pin 72 may be configured to fail before other components of the shank assembly 100. More particularly, the shear pin 72 is configured to fail before the support pin 70 and the shank 50. As such, the shear pin 72 has a lower fatigue life threshold (e.g., a shorter fatigue life) than a fatigue life threshold of the support pin 70 and a fatigue life threshold of the shank 50. Accordingly, the shear pin 72 may break to protect at least the support pin 70 and/or the shank 50 from damage or failure as will be described in greater detail below.

Additionally, in several embodiments, the shank assembly 100 may include a biasing element 74 for biasing the shank 50 towards a ground-engaging tool position relative to the frame 28. In general, the shank 50 is configured to penetrate the soil to a desired depth when the shank 50 is in the ground-engaging tool position. **In** operation, the biasing element 74 may permit relative movement between the shank 50 and the frame 28. For example, the biasing element 74 may be configured to bias the shank 50 (and the attachment structure 60) to pivot relative to the frame 28 in a first pivot direction (e.g., as indicated by arrow 76). The biasing element 74 also allow the shank 50 (and the attachment structure 60) to pivot away from the ground-engaging tool position (e.g., to a shallower depth of penetration), such as in a second pivot direction (e.g., as indicated by arrow 78 in FIG. 3) opposite the first pivot direction 76, when encountering rocks or other impediments in the field. In the embodiment shown, the biasing element 74 is configured as a spring. It should be recognized, however, that the biasing element 74 may be configured as an actuator or any other suitable biasing element.

During normal operation, the tip end 50A of the shank 50 may encounter impediments in the field causing the shank assembly 100 to rotate about the first pivot point 66 in the second pivot direction 78. Typically, the shank 50 will pivot upwards in the second pivot direction 78 about the first pivot point 66 to clear the impediment and then will return to its home or ground-engaging position via the action of the biasing element 74. However, in certain instances, a larger amount of force than typical may be transmitted through the shank assembly 100 and/or the shear pin 72 may reach its fatigue limit. In such instances the shear pin 72 may be designed to fracture or fail, thereby allowing the shank 50 to rotate about the second pivot point 68 relative to the attachment member 64. For instance, the shank 50 may rotate about the second pivot point 68 (as indicated by arrow 80 in FIG. 3) to the shank position indicated by dashed lines in FIG. 3. As such, when the shear pin 72 has failed, the shank 50 can no longer perform the tillage operation. As indicated above, the longer an operator continues to perform the tillage operation with the broken shear pin 72, the worse the overall quality of the tillage operation.

As such, in accordance with aspects of the present subject matter, the shank assembly 100 further includes one or more sensors 102 for monitoring a load on one or more of the components of the shank assembly 100, where the data from the sensor(s) 102 may be used to determine a remaining fatigue life of the shear pin 72. For instance, in some embodiments, the sensor(s) 102 may include one or more indirect sensors, such as one or more support pin sensors 102A configured to generate data indicative of a load on the support pin 70, one or more biasing element sensors 102B configured to generate data indicative of a load on the biasing element 74, and/or one or more shank sensors 102C configured to generate data indicative of a load on the shank 50. More particularly, the support pin sensor(s) 102A is configured to generate data indicative of a strain and/or shear force acting on the support pin 70. For instance, in some embodiments, the support pin sensor(s) 102A includes a strain gauge coupled to the support pin. For example, in one embodiment, the support pin 70 is configured as a load pin, having the support pin sensor(s) 102A provided at least partially within the support pin 70. The biasing element sensor(s) 102B is configured to generate data indicative of a displacement of the biasing element 74 from a base or rest position. For instance, in some embodiments, the biasing element sensor(s) 102B includes one or more of a string potentiometer, a differential transformer, and/or the like coupled to the biasing element 74. The shank sensor(s) 102C is configured to generate data indicative of an acceleration and/or a strain on the shank 50. For example, in some embodiments, the shank sensor(s) 102C includes an accelerometer and/or a strain gauge coupled to the ground-engaging tool. It should be appreciated that indirect sensors (e.g., sensors 102A, 102B, 102C) may be less expensive as they are coupled to components or elements of the shank assembly 100 that are not designed to fail and, as such, are less likely to be lost or broken.

Additionally, or alternatively, the sensor(s) 102 may include one or more direct sensors, such as one or more shear pin sensors 102D configured to generate data indicative of a load on the shear pin 72 itself. More particularly, the shear pin sensor(s) 102D is configured to generate data indicative of a strain and/or shear force acting on the shear pin 72. For instance, in some embodiments, the shear pin sensor(s) 102D includes a strain gauge coupled to the shear pin 72. For example, in one embodiment, the shear pin 72 is configured as a load pin, having the shear pin sensor(s) 102D provided at least partially within the shear pin 72. It should be appreciated that by using direct sensors (e.g., sensor(s) 102D), the remaining fatigue life determined may be more accurate than when using indirect sensors alone.

It should be appreciated, however, that the sensor(s) 102 may be configured to generate data indicative of any other suitable load acting on the support pin 70, the shear pin 72, the biasing element 74, and/or the shank 50 and, as such, may be configured as any other suitable sensor(s). It should additionally be appreciated that the sensor(s) 102 may be configured to generate data indicative of the load on any other suitable component of the shank assembly (e.g., the load on the attachment members 61, 62, 64, the first pivot joint 66, etc.).

As will be described below in greater detail, a controller of the disclosed system may be communicatively coupled to the sensor(s) 102 (e.g., sensor(s) 102A, 102B, 102C, 102D). The controller may be configured to indirectly and/or directly determine the remaining fatigue life of the associated shear pin 72 based on the data received from the sensor(s) 102 indicative of the load on the support pin 70, the load on the biasing element 74, the load on the shank 50, and/or the load on the shear pin 72 itself. In general, the remaining fatigue life may be determined based on the monitored load associated with one of the components of the shank assembly (e.g., based on data from a single sensor 102) or cumulatively determined based on the monitored load associated with two or more of the components of the shank assembly (e.g., based on data from a combination of the above-described sensors 102). Based on the remaining fatigue life, the controller may control an operation of the agricultural implement 10 to avoid failure of the shear pin 72 during a tillage operation or notify the operator of the remaining fatigue life of the shear pin.

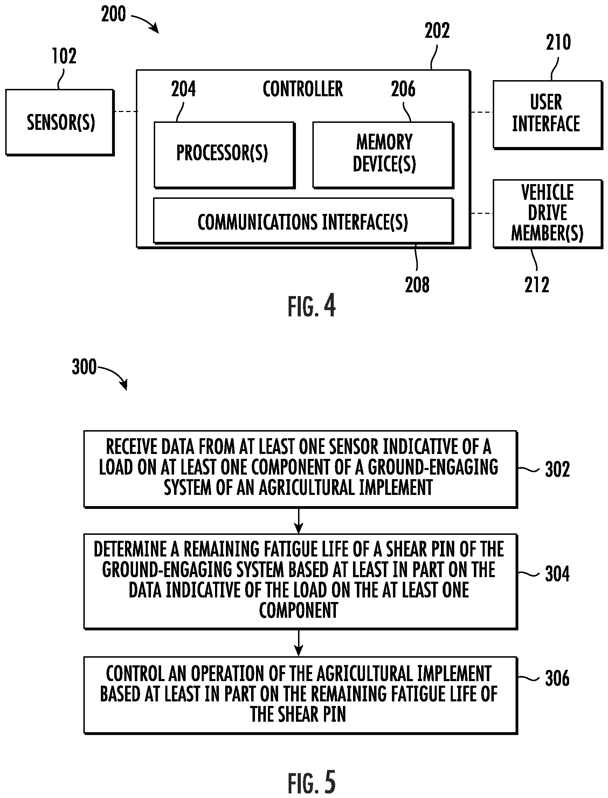

Referring now to FIG. 4, a schematic view of one embodiment of a system 200 for determining the remaining fatigue life of a shear pin of a ground-engaging system of an agricultural implement is illustrated in accordance with aspects of the present subject matter. In general, the system 200 will be described herein with reference to the implement 10 described above with reference to FIGS. 1 and 2 and the shank assembly 100 described above with reference to FIG. 3. However, it should be appreciated that, in general, the disclosed system 200 may be utilized with any suitable implement having any suitable implement configuration to allow the remaining fatigue life of a shear pin of a ground-engaging system of the implement to be determined. Moreover, it should be appreciated that the disclosed system 200 may be used with any other suitable ground-engaging tool of an agricultural implement.

As shown in FIG. 4, the system 200 may include a controller 202 and various other components configured to be communicatively coupled to and/or controlled by the controller 202. For instance, the controller 202 may be communicatively coupled to the sensor(s) 102 (e.g., the sensors 102A, 102B, 102C, 102D) that generate data indicative of a load applied to one of the components of the shank assembly 100 (e.g., a load on the support pin(s) 70, a load on the biasing element(s) 74, a load on the shank 50, and/or a load on the shear pin 72, respectively). Further, the controller 202 may be communicatively coupled to and/or configured to control a user interface 210. The user interface 210 described herein may include, without limitation, any combination of input and/or output devices that allow an operator to provide inputs to the controller 202 and/or that allow the controller 202 to provide feedback to the operator, such as a keyboard, keypad, pointing device, buttons, knobs, touch sensitive screen, mobile device, audio input device, audio output device, and/or the like. Additionally, the controller 202 may be communicatively coupled to and/or configured to control one or more vehicle drive members 212, such as an engine and/or a transmission of the work vehicle 12.

In general, the controller 202 may comprise any suitable processor-based device known in the art, such as a computing device or any suitable combination of computing devices. Thus, in several embodiments, the controller 202 may include one or more processor(s) 204, and associated memory device(s) 206 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 206 of the controller 202 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 206 may generally be configured to store suitable computer-readable instructions that, when implemented by the processor(s) 204, configure the controller 202 to perform various computer-implemented functions, such as one or more aspects of the methods and algorithms that will be described herein. In addition, the controller 202 may also include various other suitable components, such as a communications circuit or module, one or more input/output channels, a data/control bus and/or the like.

It should be appreciated that, in several embodiments, the controller 202 may correspond to an existing controller of the agricultural implement 10 and/or of the work vehicle 12 to which the implement 10 is coupled. However, it should be appreciated that, in other embodiments, the controller 202 may instead correspond to a separate processing device. For instance, in one embodiment, the controller 202 may form all or part of a separate plug-in module that may be installed within the agricultural implement 10 to allow for the disclosed system and method to be implemented without requiring additional software to be uploaded onto existing control devices of the agricultural implement 10.

**In** some embodiments, the controller 202 may be configured to include one or more communications modules or interfaces 208 for the controller 202 to communicate with any of the various system components described herein. For instance, one or more communicative links or interfaces (e.g., one or more data buses) may be provided between the communications interface 208 and the sensor(s) 102 (e.g., the sensors 102A, 102B, 102C, 102D) to allow the controller 202 to receive data indicative of a load applied to one of the components of the shank assembly 100 (e.g., a load on the support pin(s) 70, a load on the biasing element(s) 74, a load on the shank 50, and/or a load on the shear pin 72) from the sensor(s) 102. Further, one or more communicative links or interfaces (e.g., one or more data buses) may be provided between the communications interface 208 and a user interface (e.g., user interface 210) to allow operator inputs to be received by the controller 202 and/or allow the controller 202 to control the operation of one or more components of the user interface 210. Additionally, one or more communicative links or interfaces (e.g., one or more data buses) may be provided between the communications interface 208 and the vehicle drive member(s) 212 to allow the controller 202 to control the operation of the vehicle drive member(s) 212.

As indicated above, the controller 202 may be configured to determine a remaining fatigue life of a shear pin (e.g., the shear pin 72) of a shank assembly 100 based at least in part on data indicative of a load on one or more components of the shank assembly 100 (e.g., a load on the support pin 70, a load on the biasing element 74, a load on the shank 50, and/or a load on the shear pin 72). For example, the controller 202 may include one or more suitable relationships and/or algorithms stored within its memory 206 that, when executed by the processor 204, allow the controller 202 to determine the remaining fatigue life of the shear pin 72 based on the data from the sensor(s) 102. For instance, when the sensor(s) 102 include indirect sensors, such as the support pin sensor(s) 102A configured to generate data indicative of a load on the support pin 70, one or more biasing element sensor(s) 102B configured to generate data indicative of a load on the biasing element 74, and/or one or more shank sensor(s) 102C configured to generate data indicative of a load on the shank 50, the controller 202 may include pre-defined relationships or algorithms used to indirectly determine a corresponding load(s) on the shear pin 72, which may then be used to determine a remaining fatigue life of the shear pin 72 using any suitable relationships or algorithms. Similarly, when the sensor(s) 102 include direct sensors, such as the shear pin sensor(s) 102D configured to generate data directly indicative of a load on the shear pin itself 72, the controller 202 may include relationships used to determine the remaining fatigue life of the shear pin 72 using any suitable relationships or algorithms.

For instance, a simple free body diagram may be used to estimate the load on the shear pin 72 based on the loads measured at the other components of the shank assembly 100. Alternatively, or additionally, one or more relationships may be established that correlate material specifications (e.g., modulus of elasticity) of the different components of the shank assembly 100 (e.g., the support pin 70, the biasing element 74, and/or the shank 50) and the monitored loads on the components to more accurately estimate loads on the shear pin 72. Additionally, or alternatively, a look-up table may be generated by or provided to the controller 202 that correlates measured loads at the different components of the shank assembly 100 to the effective loads applied at the shear pin 72. Such look-up table may be generated, for example, by directly measuring the loads at the shear pin in response to known loads applied at one or more of the other components of the shank assembly 100 during a testing operation (e.g., during manufacturing).

The estimated loads on the shear pin 72 may then be used in combination with material specifications of the shear pin 72 to determine the overall damage or fatigue of the shear pin 72. Alternatively, the monitored loads on the shear pin itself 72 may be used in combination with the material specifications of the shear pin 72 to determine the overall damage or fatigue of the shear pin 72. Then, the overall damage or fatigue of the shear pin 72 may be used to determine the remaining fatigue life of the shear pin 72. For instance, the overall damage or fatigue of the shear pin 72 may be subtracted from an expected fatigue life threshold of the shear pin 72 to determine a remaining fatigue life of the shear pin 72.

It should be appreciated that, in some embodiments, the controller 202 may determine the remaining fatigue life of the shear pin 72 based at least in part on both the data from the indirect sensor(s) (e.g., sensor(s) 102A, 102B, 102C) and the data from the direct sensors (e.g., sensors 102D). It should further be appreciated that the controller 202 may be configured to determine the remaining fatigue life of the shear pin of a plurality of shank assemblies 100 of the agricultural implement 10, or that a separate controller 202 may be provided for each respective one of a plurality of shank assemblies 100 for determining the remaining fatigue life of the associated shear pin. Additionally, it should be appreciated that, in one embodiment, the controller 202 is configured to continuously collect data from the sensor(s) 102 such that the remaining fatigue life of the shear pin 72 may account for each load applied to the monitored component(s).

Once the remaining fatigue life of the shear pin 72 is determined, in some embodiments, the controller 202 controls the operation of the user interface 210 to display or otherwise indicate the determined fatigue life of the shear pin 72. Alternatively, or additionally, in some embodiments, the controller 202 may be further configured to control an operation of the agricultural implement 10 based on the remaining fatigue life of the shear pin 72. For instance, the controller 202 may be configured to compare the remaining fatigue life of the shear pin 72 to a fatigue life threshold of the shear pin 72. In general, as indicated above, the shear pin 72 is selected to fail before the support pin 70 and/or the shank 50. As such, the shear pin 72 is generally selected to have a fatigue life threshold that is greater than the fatigue life threshold of the support pin 70 and/or the fatigue life threshold of the shank 50 (or any other suitable component of the shank assembly 100).

It should be appreciated that the fatigue life threshold of the shear pin 72 may be predetermined and stored within the memory 206 of the controller 202 or may be determined by and/or provided to the controller 202 in any other suitable manner. For instance, the fatigue life threshold may indicate a number of cycles of a particular load that the shear pin 72 may undergo before failure. The fatigue life threshold may be determined theoretically based at least on material properties of the shear pin 72 (e.g., modulus of elasticity) and an average load that the shear pin 72 may experience during operation. Similarly, machine learning techniques may be used to determine the fatigue life threshold of the shear pin 72. For instance, one or more sample fatigue life load data and resulting thresholds may be input into a machine learning algorithm to provide an initial estimate for the fatigue life threshold and, as more data is fed into the machine learning algorithm during operation of the implement 10, the estimated fatigue life threshold may become more accurate. Alternatively, or additionally, an analytical weighing system may be used to determine the fatigue life threshold of the shear pin 72, where the system applies heavier weights to larger loads and lower weights to smaller loads to actively adjust the fatigue life threshold of the shear pin 72 throughout the tillage operation.

When the remaining fatigue life of the shear pin 72 is equal to or less than the fatigue life threshold for the shear pin 72, the controller 202 determines that the shear pin 72 is close to failure or is otherwise in a compromised state and the controller 202 performs a control action. In one embodiment, the control action includes controlling the operation of the user interface 210 to notify an operator of the agricultural implement 10 that the shear pin 72 needs to be replaced. In some embodiments, the control action additionally, or alternatively, includes controlling an operation of one or more vehicle drive components configured to drive the vehicle 12 coupled to the implement 10, such as the engine and/or transmission of the vehicle 12. In such embodiments, the controller 202 may be configured to control the operation of the vehicle drive component(s) to slow down the vehicle 12 and attached implement 10 or bring the vehicle 12 and implement 10 to a stop. It should be appreciated that, depending on the type of controller being used, the above-described control actions may be executed directly by the controller 202 or indirectly via communications with a separate controller (e.g., using an ISObus communications protocol).

Referring now to FIG. 5, a flow diagram of one embodiment of a method 300 for determining the remaining fatigue life of a shear pin of a ground-engaging system of an agricultural implement is illustrated in accordance with aspects of the present subject matter. In general, the method 300 will be described herein with reference to the implement 10 and the work vehicle 12 shown in FIGS. 1 and 2, the shank assembly 100 described above with reference to FIG. 3, and the various components of the system 200 described with reference to FIG. 4. However, it should be appreciated that the disclosed method 300 may be implemented with work vehicles and/or implements having any other suitable configurations and/or within systems having any other suitable system configuration. In addition, although FIG. 5 depicts steps performed in a particular order for purposes of illustration and discussion, the methods discussed herein are not limited to any particular order or arrangement. One skilled in the art, using the disclosures provided herein, will appreciate that various steps of the method disclosed herein can be omitted, rearranged, combined, and/or adapted in various ways without deviating from the scope of the present disclosure.

As shown in FIG. 5, at (302), the method 300 may include receiving data from at least one sensor indicative of a load on at least one component of a ground-engaging system of an agricultural implement. For instance, as described above, the controller 202 may be configured to receive input(s) from one or more sensors 102 configured to generate data indicative of loads on one of the components of the shank assembly 100. For example, the controller 202 may be configured to receive input(s) from the support pin sensor(s) 102A configured to generate data indicative of a load on the support pin 70, the biasing element sensor(s) 102B configured to generate data indicative of a load on the biasing element 74, the shank sensor(s) 102C configured to generate data indicative of a load on the shank 50, and/or the shear pin sensor(s) 102D configured to generate data indicative of a load on the shear pin 72 itself.

Further, at (304), the method 300 may include determining a remaining fatigue life of a shear pin of the ground-engaging system based at least in part on the data indicative of the load on the at least one component. For example, as discussed above, the controller 202 may be configured to analyze the sensor data received from the sensor(s) 102 (e.g., sensor(s) 102A, 102B, 102C, 102D) using any suitable relationships or algorithms to determine the remaining fatigue life of the shear pin 72.

Additionally, at (306), the method 300 may include controlling an operation of the agricultural implement based at least in part on the remaining fatigue life of the shear pin. For instance, as described above, the controller 202 may be configured to control the operation of the user interface 210 to display the remaining fatigue life of the shear pin 72 and/or that the shear pin 72 needs to be replaced based on the remaining fatigue life of the shear pin 72. Alternatively, or additionally, the controller 202 may be configured to control the operation of one or more vehicle drive members 212 to slow down or stop the implement based on the remaining fatigue life of the shear pin 72. For example, the controller 202 may perform such control actions when the remaining fatigue life of the shear pin 72 is equal to or below a fatigue life threshold of the shear pin 72.

It is to be understood that the steps of the method 300 are performed by the computing system 200 upon loading and executing software code or instructions which are tangibly stored on a tangible computer readable medium, such as on a magnetic medium, e.g., a computer hard drive, an optical medium, e.g., an optical disk, solid-state memory, e.g., flash memory, or other storage media known in the art. Thus, any of the functionality performed by the computing system 200 described herein, such as the method 300, is implemented in software code or instructions which are tangibly stored on a tangible computer readable medium. The computing system 200 loads the software code or instructions via a direct interface with the computer readable medium or via a wired and/or wireless network. Upon loading and executing such software code or instructions by the computing system 200, the computing system 200 may perform any of the functionality of the computing system 200 described herein, including any steps of the method 300 described herein.

The term "software code" or "code" used herein refers to any instructions or set of instructions that influence the operation of a computer or computing system. They may exist in a computer-executable form, such as machine code, which is the set of instructions and data directly executed by a computer's central processing unit or by a computing system, a human-understandable form, such as source code, which may be compiled in order to be executed by a computer's central processing unit or by a computing system, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a computing system.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims.

## Claims

1. A system (200) for determining the remaining fatigue life of a shear pin of a ground engaging system of an agricultural implement (10), the system (200) comprising a ground-engaging system (100) including an attachment structure (60) coupled to a frame (28) of an agricultural implement (10), a ground-engaging tool (50) pivotably coupled to the attachment structure (60) at a pivot joint (68), a shear pin (72) at least partially extending through the attachment structure (60) and the ground-engaging tool (50) to prevent pivoting of the ground-engaging tool (50) about the pivot joint (68), a biasing element (74) coupled between the attachment structure (60) and the ground-engaging tool (50), the biasing element (74) configured to bias the ground-engaging tool (50) towards a ground-engaging position,
at least one sensor (102) configured to generate data indicative of a load on at least one component of the ground-engaging system (100), and
a controller (202) communicatively coupled to the at least one sensor (102), the system (200) being **characterized by**
the controller (202) being configured to determine a remaining fatigue life of the shear pin (72) based at least in part on the data indicative of the load on the at least one component of the ground-engaging system (100).

2. The system (200) as in claim 1, wherein the at least one component comprises the ground-engaging tool (50) and the data is indicative of a load on the ground-engaging tool (50).

3. The system (200) as in claim 2, wherein the at least one sensor (102C) comprises one or more of an accelerometer or a strain gauge coupled to the ground-engaging tool (50).

4. The system (200) as in claim 1, further comprising a support pin (70) at least partially extending through the attachment structure (60) and the ground-engaging tool (50) at the pivot joint (68) to allow the ground-engaging tool (50) to pivot relative to the attachment structure (60),
wherein the at least one component comprises the support pin (70) and the data is indicative of a load on the support pin (70).

5. The system (200) as in claim 4, wherein the at least one sensor (102A) comprises a strain gauge coupled to the support pin (70).

6. The system (200) as in claim 1, wherein the at least one component comprises the biasing element (74) and the data is indicative of a load on the biasing element (74).

7. The system (200) as in claim 6, wherein the at least one sensor (102B) comprises one or more of string potentiometer and a differential transformer coupled to the biasing element (74).

8. The system (200) as in claim 1, wherein the at least one component comprises the shear pin (72) and the data is indicative of a load on the shear pin (72).

9. The system (200) as in claim 8, wherein the at least one sensor (102D) comprises a strain gauge coupled to the shear pin (72).

10. The system (200) as in claim 1, wherein the ground-engaging tool (50) comprises a shank.

11. A method (300) for determining the remaining fatigue life of a shear pin (72) of a ground engaging system (100) of an agricultural implement (10), the ground engaging system (100) comprising an attachment structure (60) configured to be coupled to a frame (28) of the agricultural implement (10), a ground-engaging tool (50) pivotably coupled to the attachment structure (60) at a pivot joint (68), a shear pin (72) at least partially extending through the attachment structure (60) and the ground-engaging tool (50), and a biasing element (74) configured to bias the ground-engaging tool (50) towards a ground-engaging position, the method (300) comprising:
receiving, with one or more computing devices, data from at least one sensor (102), the data being indicative of a load on at least one component of the ground-engaging system (100); the method (300) being **characterized by**:
determining, with the one or more computing devices, a remaining fatigue life of the shear pin (72) based at least in part on the data indicative of the load on the at least one component of the ground-engaging system (100); and
controlling, with the one or more computing devices, an operation of the agricultural implement (10) based at least in part on the remaining fatigue life of the shear pin (72).

12. The method (300) as in claim 11, wherein the data is indicative of at least one of:
a load on the ground-engaging tool (50),
a load on a support pin (70), the support pin (70) at least partially extending through the attachment structure (60) and the ground-engaging tool (50) at the pivot joint to allow the ground-engaging tool (50) to pivot relative to the attachment structure (60),
a load on the biasing element (74), or
a load on the shear pin (72).

13. The method (300) as in claim 11, wherein controlling the operation of the agricultural implement (10) comprises controlling the operation of the agricultural implement (10) when the remaining fatigue life is equal to or less than a fatigue life threshold.

14. The method (300) as in claim 11, wherein controlling the operation of the agricultural implement (10) comprises at least one of controlling a user interface (210) of the agricultural implement (10) to notify an operator of the agricultural implement (10) of the remaining fatigue life or stopping the agricultural implement (10).

## Patentansprüche

1. System (200) zur Bestimmung der Ermüdungslebensdauer eines Scherstiftes eines Bodenbearbeitungssystems eines landwirtschaftlichen Geräts (10), wobei das System (200) umfasst:
ein Bodenbearbeitungssystem (100) mit einer Befestigungsstruktur (60), die mit einem Rahmen (28) eines landwirtschaftlichen Geräts (10) gekoppelt ist, einem Bodenbearbeitungswerkzeug (50), das mit der Befestigungsstruktur (60) an einer Schwenkverbindungseinrichtung (68) schwenkbeweglich verbunden ist, einem Scherstift (72), der sich zumindest teilweise durch die Befestigungsstruktur (60) und durch das Bodenbearbeitungswerkzeug (50) erstreckt, um eine Schwenkbewegung des Bodenbearbeitungswerkzeugs (50) um die Schwenkverbindungseinrichtung (68) zu verhindern, und einem Vorspannelement (74), das zwischen der Befestigungsstruktur (60) und dem Bodenbearbeitungswerkzeug (50) verbunden ist, wobei das Vorspannelement (74) dazu eingerichtet ist, das Bodenbearbeitungswerkzeug (50) in die Bodenbearbeitungsposition vorzuspannen,
mindestens einen Sensor (102), der dazu eingerichtet ist, Daten zu erzeugen, die eine Last an mindestens einer Komponente des Bodenbearbeitungssystems (100) angeben, und
eine Steuerung (202), die mit dem mindestens einen Sensor (102) in Kommunikationsverbindung steht,
wobei das System (200) **dadurch gekennzeichnet ist, dass**
die Steuerung (202) dazu eingerichtet ist, eine Ermüdungslebensdauer des Scherstiftes (72) auf Basis zumindest teilweise der Daten, die die Last an zumindest einer Komponente des Bodenbearbeitungssystems (100) angeben, zu bestimmen.

2. System (200) nach Anspruch 1, wobei die mindestens eine Komponente das Bodenbearbeitungswerkzeug (50) aufweist und die Daten eine Last auf das Bodenbearbeitungswerkzeug (50) angeben.

3. System (200) nach Anspruch 2, wobei der mindestens eine Sensor (102C) einen oder mehrere aus einem Beschleunigungsmesser oder einem Dehnungsmesser umfasst, der mit dem Bodenbearbeitungswerkzeug (50) gekoppelt ist.

4. System (200) nach Anspruch 1, das des Weiteren einen Lagerstift (70) aufweist, der sich zumindest teilweise durch die Befestigungsstruktur (60) und das Bodenbearbeitungswerkzeug (50) an der Schwenkverbindungseinrichtung (68) erstreckt, so dass das Bodenbearbeitungswerkzeug (50) eine Schwenkbewegung bezüglich der Befestigungsstruktur (60) ausführen kann,
wobei die mindestens eine Komponente den Lagerstift (70) umfasst und die Daten eine Last an dem Lagerstift (70) angeben.

5. System (200) nach Anspruch 4, wobei der mindestens eine Sensor (102A) einen Dehnungsmesser umfasst, der mit dem Lagerstift (70) gekoppelt ist.

6. System (200) nach Anspruch 1, wobei die mindestens eine Komponente das Vorspannelement (74) umfasst und die Daten eine Last an dem Vorspannelement (74) angeben.

7. System (200) nach Anspruch 6, wobei der mindestens eine Sensor (102B) einen oder mehrere aus einem Seilzugmesser und einem Differenzialtransformator umfasst, der mit dem Vorspannelement (74) gekoppelt ist.

8. System (200) nach Anspruch 1, wobei die mindestens eine Komponente den Scherstift (72) umfasst und die Daten eine Last an dem Scherstift (72) angeben.

9. System (200) nach Anspruch 8, wobei der mindestens eine Sensor (102D) einen Dehnungsmesser umfasst, der mit dem Scherstift (72) gekoppelt ist.

10. System (200) nach Anspruch 1, wobei das Bodenbearbeitungswerkzeug (50) einen Zapfen bzw. Schaft umfasst.

11. Verfahren (300) zur Bestimmung der Ermüdungslebensdauer eines Scherstiftes (72) eines Bodenbearbeitungssystems (100) eines landwirtschaftlichen Geräts (10), wobei das Bodenbearbeitungssystem (100) eine Befestigungsstruktur (60), die dazu eingerichtet ist, mit einem Rahmen (28) eines landwirtschaftlichen Geräts (10) gekoppelt zu sein, ein Bodenbearbeitungswerkzeug (50), das mit der Befestigungsstruktur (60) an einer Schwenkverbindungseinrichtung (68) schwenkbeweglich verbunden ist, einen Scherstift (72), der sich zumindest teilweise durch die Befestigungsstruktur (60) und durch das Bodenbearbeitungswerkzeug (50) erstreckt, und ein Vorspannelement (74) aufweist, das dazu eingerichtet ist, das Bodenbearbeitungswerkzeug (50) in die Bodenbearbeitungsposition vorzuspannen,
wobei das Verfahren (300) folgende Schritte aufweist:
Erhalten, mit einer oder mehreren Computereinrichtungen, von Daten von mindestens einem Sensor (102), wobei die Daten eine Last an mindestens einer Komponente des Bodenbearbeitungssystems (100) angeben;
wobei das Verfahren durch die folgenden Schritte gekennzeichnet ist:
Bestimmen, mit einer oder mehreren Computereinrichtungen, einer Ermüdungslebensdauer des Scherstiftes (72) zumindest teilweise auf Basis der Daten, die die Last an der mindestens einen Komponente des Bodenbearbeitungssystems (100) angeben; und
Steuern, mit der einen oder den mehreren Computereinrichtungen, eines Betriebs des landwirtschaftlichen Geräts (10) zumindest teilweise auf Basis der Ermüdungslebensdauer des Scherstiftes (72).

12. Verfahren (300) nach Anspruch 11, wobei die Daten mindestens ein Element angeben aus:
einer Last auf das Bodenbearbeitungswerkzeug (50),
einer Last auf einen Lagerstift (70), wobei sich der Lagerstift (70) zumindest teilweise durch die Befestigungsstruktur (60) und das Bodenbearbeitungswerkzeug (50) an der Schwenkverbindungseinrichtung erstreckt, so dass das Bodenbearbeitungswerkzeug (50) eine Schwenkbewegung relativ zur Befestigungsstruktur (60) ausführen kann,
einer Last auf das Vorspannelement (74), oder
einer Last auf den Scherstift (72).

13. Verfahren (300) nach Anspruch 11, wobei das Steuern des Betriebs des landwirtschaftlichen Geräts (10) das Steuern des Betriebs des landwirtschaftlichen Geräts (10) umfasst, wenn die Ermüdungslebensdauer gleich oder geringer als ein Ermüdungslebensdauer-Schwellenwert ist.

14. Verfahren (300) nach Anspruch 11, wobei das Steuern des Betriebs des landwirtschaftlichen Geräts (10) zumindest eines aus Steuern einer Benutzerschnittstelle (21) des landwirtschaftlichen Geräts (10), um eine Bedienperson über die Ermüdungslebensdauer des landwirtschaftlichen Geräts (10) zu informieren, oder Anhalten des landwirtschaftlichen Geräts (10) umfasst.

## Revendications

1. Système (200) de détermination de la durée de vie en fatigue restante d'une goupille de cisaillement d'un système d'engagement avec le sol d'un outil agricole (10), le système (200) comprenant un système d'engagement avec le sol (100) incluant une structure d'attelage (60) couplée à un châssis (28) d'un outil agricole (10), un outil d'engagement avec le sol (50) couplé de manière pivotante à la structure d'attelage (60) au niveau d'un joint de pivot (68), une goupille de cisaillement (72) traversant au moins partiellement la structure d'attelage (60) et l'outil d'engagement avec le sol (50) pour empêcher le pivotement de l'outil d'engagement avec le sol (50) autour du joint de pivot (68), un élément de sollicitation (74) couplé entre la structure d'attelage (60) et l'outil d'engagement avec le sol (50), l'élément de sollicitation (74) étant configuré pour solliciter l'outil d'engagement avec le sol (50) vers une position d'engagement avec le sol,
au moins un capteur (102) configuré pour générer des données indicatives d'une charge au niveau d'au moins un composant du système d'engagement avec le sol (100), et
un dispositif de commande (202) couplé de manière communicative à l'au moins un capteur (102),
le système (200) étant **caractérisé par le fait que** le dispositif de commande (202) est configuré pour déterminer une durée de vie en fatigue restante de la goupille de cisaillement (72) en fonction au moins en partie des données indicatives de la charge au niveau de l'au moins un composant du système d'engagement avec le sol (100).

2. Système (200) selon la revendication 1, dans lequel l'au moins un composant comprend l'outil d'engagement avec le sol (50) et les données sont indicatives d'une charge au niveau de l'outil d'engagement avec le sol (50).

3. Système (200) selon la revendication 2, dans lequel l'au moins un capteur (102C) comprend un ou plusieurs parmi un accéléromètre couplé ou
une jauge de contrainte couplée à l'outil d'engagement avec le sol (50).

4. Système (200) selon la revendication 1, comprenant en outre une broche de soutien (70) traversant au moins partiellement la structure d'attelage (60) et l'outil d'engagement avec le sol (50) au niveau du joint de pivot (68) pour permettre à l'outil d'engagement avec le sol (50) de pivoter par rapport à la structure d'attelage (60),
dans lequel l'au moins un composant comprend la broche de soutien (70) et les données sont indicatives d'une charge au niveau de la broche de soutien (70).

5. Système (200) selon la revendication 4, dans lequel l'au moins un capteur (102A) comprend une jauge de contrainte couplée à la broche de soutien (70).

6. Système (200) selon la revendication 1, dans lequel l'au moins un composant comprend l'élément de sollicitation (74) et les données sont indicatives d'une charge au niveau de l'élément de sollicitation (74).

7. Système (200) selon la revendication 6, dans lequel l'au moins un capteur (102B) comprend un ou plusieurs potentiomètres à câble et un transformateur différentiel couplé à l'élément de sollicitation (74).

8. Système (200) selon la revendication 1, dans lequel l'au moins un composant comprend la goupille de cisaillement (72) et les données sont indicatives d'une charge au niveau de la goupille de cisaillement (72).

9. Système (200) selon la revendication 8, dans lequel l'au moins un capteur (102D) comprend une jauge de contrainte couplée à la goupille de cisaillement (72).

10. Système (200) selon la revendication 1, dans lequel l'outil d'engagement avec le sol (50) comprend une tige.

11. Procédé (300) de détermination de la durée de vie en fatigue restante d'une goupille de cisaillement (72) d'un système d'engagement avec le sol (100) d'un outil agricole (10), le système d'engagement avec le sol (100) comprenant une structure d'attelage (60) configurée pour être couplée à un châssis (28) de l'outil agricole (10), un outil d'engagement avec le sol (50) couplé de manière pivotante à la structure d'attelage (60) au niveau d'un joint de pivot (68), une goupille de cisaillement (72) traversant au moins partiellement la structure d'attelage (60) et l'outil d'engagement avec le sol (50), et un élément de sollicitation (74) configuré pour solliciter l'outil d'engagement avec le sol (50) vers une position d'engagement avec le sol, le procédé (300) comprenant :
la réception, à l'aide d'un ou de plusieurs dispositifs informatiques, de données provenant d'au moins un capteur (102), les données étant indicatives d'une charge au niveau d'au moins un composant du système d'engagement avec le sol (100) ; le procédé (300) étant **caractérisé en ce que** :
la détermination, à l'aide du ou des dispositifs informatiques, d'une durée de vie en fatigue restante de la goupille de cisaillement (72) en fonction au moins en partie des données indicatives de la charge au niveau de l'au moins un composant du système d'engagement avec le sol (100) ; et
le contrôle, à l'aide du ou des dispositifs informatiques, d'un fonctionnement de l'outil agricole (10) en fonction au moins en partie de la durée de vie en fatigue restante de la goupille de cisaillement (72).

12. Procédé (300) selon la revendication 11, dans lequel les données sont indicatives d'au moins un parmi :
une charge au niveau de l'outil d'engagement avec le sol (50),
une charge au niveau d'une broche de soutien (70), la broche de soutien (70) traversant au moins partiellement la structure d'attelage (60) et l'outil d'engagement avec le sol (50) au niveau du joint de pivot pour permettre à l'outil d'engagement avec le sol (50) de pivoter par rapport à la structure d'attelage (60),
une charge au niveau de l'élément de
sollicitation (74), ou
une charge au niveau de la goupille de
cisaillement (72).

13. Procédé (300), selon la revendication 11, dans lequel le contrôle du fonctionnement de l'outil agricole (10) comprend le contrôle du fonctionnement de l'outil agricole (10) lorsque la durée de vie en fatigue restante est égale ou inférieure à un seuil de durée de vie en fatigue.

14. Procédé (300), selon la revendication 11, dans lequel le contrôle du fonctionnement de l'outil agricole (10) comprend au moins l'un parmi le contrôle d'une interface utilisateur (210) de l'outil agricole (10) pour informer un opérateur de l'outil agricole (10) de la durée de vie en fatigue restante ou l'arrêt de l'outil agricole (10).
